# FASCICULE DE BREVET EUROPEEN

(11) **EP 3 506 443 B1**
(45) Date de publication et mention de la délivrance du brevet: **13.10.2021**
(21) Numéro de dépôt: 18210584.1
(22) Date de dépôt: 05.12.2018
(51) Int. Cl.: H02G 3/12

(54) **BOÎTE ÉLECTRIQUE À PROFONDEUR VARIABLE**
ELEKTRISCHE ANSCHLUSSDOSE MIT VARIABLER TIEFE
VARIABLE DEPTH ELECTRICAL BOX

(30) Priorité: 29.12.2017 FR 1763351
(43) Date de publication de la demande: 03.07.2019
(73) Titulaire: Legrand France, 87000 Limoges (FR); Legrand SNC, 87000 Limoges (FR)
(72) Inventeur: DELMAS, Simon, 87400 La Geneytouse (FR)
(74) Mandataire: Jacobacci Coralis Harle

(56) Documents cités:
- EP-A1- 1 670 112
- EP-A1- 3 159 988
- WO-A1-2014/118445
- FR-A1- 2 859 320

## Description

### DOMAINE TECHNIQUE AUQUEL SE RAPPORTE L'INVENTION

La présente invention concerne de manière générale les boîtes électriques, c'est-à-dire les boîtes qui sont prévues pour accueillir des appareillages électriques (prises de courant, interrupteurs...) et qui sont agencées pour se fixer dans des cloisons creuses.

Elle concerne plus particulièrement une boîte électrique à engager dans une cloison, comportant :
- un corps arrière qui comprend un fond,
- un corps avant qui comprend des moyens de fixation à la cloison, et
- un élément de jonction relié au corps avant et au corps arrière par deux charnières de telle façon que le corps arrière peut prendre deux positions stables par rapport au corps avant, dont une première position stable dans laquelle la boîte électrique présente une profondeur inférieure à celle qu'elle présente dans la seconde position stable.

### ARRIERE-PLAN TECHNOLOGIQUE

Une boîte électrique à encastrer dans une cavité prévue dans une cloison comprend généralement une paroi latérale qui est fermée à l'arrière par un fond et qui est bordé à l'avant par un épaulement. Cet épaulement est prévu pour s'appuyer contre la face avant de la cloison, sur le bord de la cavité, pour éviter que la boîte ne s'enfonce trop dans la cloison.

Le volume intérieur d'une boîte électrique est restreint si bien qu'il n'est pas aisé d'y loger non seulement un appareillage électrique, mais également l'extrémité d'une gaine de cheminement et les extrémités des conducteurs électriques (du fait notamment de la rigidité des conducteurs électriques qu'il faut replier entre l'appareillage électrique à connecter et le fond de la boîte).

C'est la raison pour laquelle, lorsque l'épaisseur de la cloison le permet, on privilégie l'utilisation de boîtes profondes (50 millimètres). Il arrive malheureusement souvent que la cloison ne permette pas l'utilisation d'une telle boîte, et que l'électricien soit contraint d'utiliser une boîte moins profonde (40 millimètres).

Il est donc nécessaire de prévoir systématiquement deux références de boîtes (40 et 50 mm), au prix d'un doublement des références et donc au détriment des coûts de fabrication et de stockage des boîtes.

Pour remédier à cet inconvénient, on connaît du document EP1670112 une boîte électrique comportant une paroi latérale, un fond et, entre la paroi latérale et le fond, une paroi annulaire. Cette paroi annulaire est liée au fond et à la paroi latérale par des bords amincis. Ces bords amincis forment des sortes de charnière, ce qui permet de repousser le fond de la boîte pour augmenter son volume intérieur si l'épaisseur de la cloison le permet.

L'inconvénient majeur de cette boîte électrique est que l'effort nécessaire pour déplacer le fond est très élevé, ce qui rend le travail de l'électricien fastidieux. Le document FR2859320A1 divulgue une boîte d'encastrement à configuration multiple présentant une profondeur réglable entre au moins une profondeur supérieure et une profondeur inférieure; le document EP3159 988A1 décrit une boîte en deux parties (un corps arrière 10 et une collerette avant 50) connectées ensemble par une ceinture périphérique 80 réalisé dans un matériau plus souple que les deux parties.

### OBJET DE L'INVENTION

Afin de remédier à l'inconvénient précité de l'état de la technique, la présente invention propose une boîte électrique telle que définie dans l'introduction, dans laquelle il est prévu plusieurs éléments de jonction distincts et dans laquelle le corps arrière comporte, entre deux éléments de jonction distincts, au moins une partie déformable qui est adaptée à se déformer avec une plus grande amplitude que le reste du corps arrière lors du pivotement des éléments de jonction par rapport au corps avant et au corps arrière.

Par « éléments de jonction distincts », on entend éléments de jonctions disjoints.

Ainsi, selon l'invention, pour permettre au corps arrière de se déformer afin de pouvoir passer d'une profondeur de boîte à l'autre, il est prévu d'interrompre l'élément de jonction qui relie les corps avant et arrière et de placer, au niveau de cette interruption, une partie spécifiquement conçue pour se déformer. Ainsi l'effort requis pour passer d'une profondeur de boîte à l'autre se trouve restreint.

Cette solution présente un avantage majeur par rapport à l'état de la technique divulgué dans le document EP1670112, dont on observe qu'il nécessitait d'utiliser un matériau assez souple pour fabriquer la boîte afin de pouvoir passer d'une profondeur de boîte à l'autre. Cet avantage est que le corps avant, qui porte les moyens de fixation à la paroi, peut être réalisé de façon à présenter une très grande rigidité puisqu'il n'a pas à se déformer, ce qui assure une bonne fixation de la boîte électrique à la cloison creuse.

D'autres caractéristiques avantageuses et non limitatives de la boîte électrique conforme à l'invention sont les suivantes :
- la partie déformable présente une fente ;
- le corps arrière comporte une paroi latérale qui est fermée à l'arrière par le fond et qui est ouverte à l'avant au niveau d'un bord avant ;
- la fente débouche sur ledit bord avant ;
- la fente se prolonge dans le fond du corps arrière ;
- la fente est obturée par un opercule réalisé dans un matériau plus souple que la partie déformable ;
- le corps arrière comporte une paroi latérale qui est fermée à l'arrière par le fond et qui forme au moins un renfoncement vers l'intérieur, ladite partie déformable étant formée par ce renfoncement ;
- le corps avant comporte un puits de vissage pour une vis de fixation, et le renflement délimite un passage pour le puits de vissage ;
- une partie au moins du corps avant, une partie au moins du corps arrière, et chaque élément de jonction viennent de formation d'une seule pièce par moulage d'une matière plastique ;
- chaque charnière est formée par un bord aminci de l'élément de jonction ;
- il est prévu au moins un film d'étanchéité qui relie le corps avant et le corps arrière entre chaque élément de jonction ;
- le corps avant comporte une paroi latérale présentant un relief d'accrochage qui courre sur l'ensemble de son pourtour et qui permet l'accrochage d'un étui d'étanchéité ;
- la paroi latérale du corps avant présente un bord arrière auquel se rattache chaque élément de jonction, et le relief d'accrochage comporte une nervure et/ou une rainure qui longe l'ensemble dudit bord arrière.

L'invention concerne aussi un ensemble comportant une boîte électrique telle que précité et un étui d'étanchéité accroché au relief d'accrochage du corps avant de ladite boîte électrique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- les figures 1 et 2 sont des vues schématiques en perspective d'une boîte électrique conforme à un premier mode de réalisation de l'invention, sur lesquelles la boîte électrique est représentée dans une première position stable et est vue sous deux angles différents ;
- les figures 3 et 4 sont des vues schématiques en perspective de la boîte électrique de la figure 1, sur lesquelles la boîte électrique est représentée dans une seconde position stable et est vue sous deux angles différents ;
- les figures 5 et 6 sont des vues schématiques en perspective d'une boîte électrique conforme à un second mode de réalisation de l'invention, vue sous deux angles différents ;
- la figure 7 est une vue schématique en perspective d'un élément d'étanchéité à rapporter sur la boîte électrique de la figure 5 ;
- la figure 8 est une vue schématique en perspective d'un ensemble comportant la boîte électrique de la figure 5 et l'élément d'étanchéité de la figure 7 ; et
- les figures 9 et 10 sont des vues en coupe selon le plan A-A de la figure 8, sur lesquelles la boîte électrique est représentée dans deux positions stables distinctes.

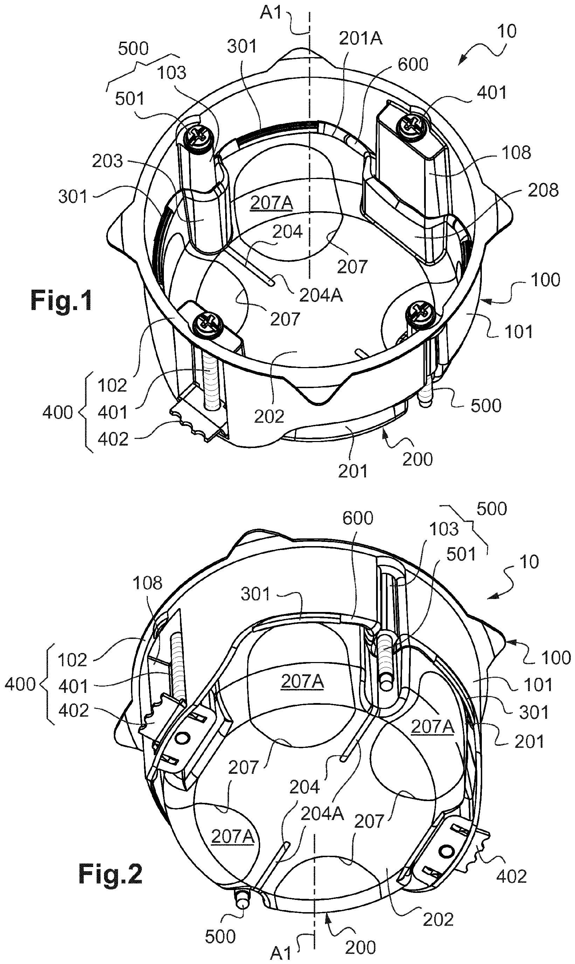

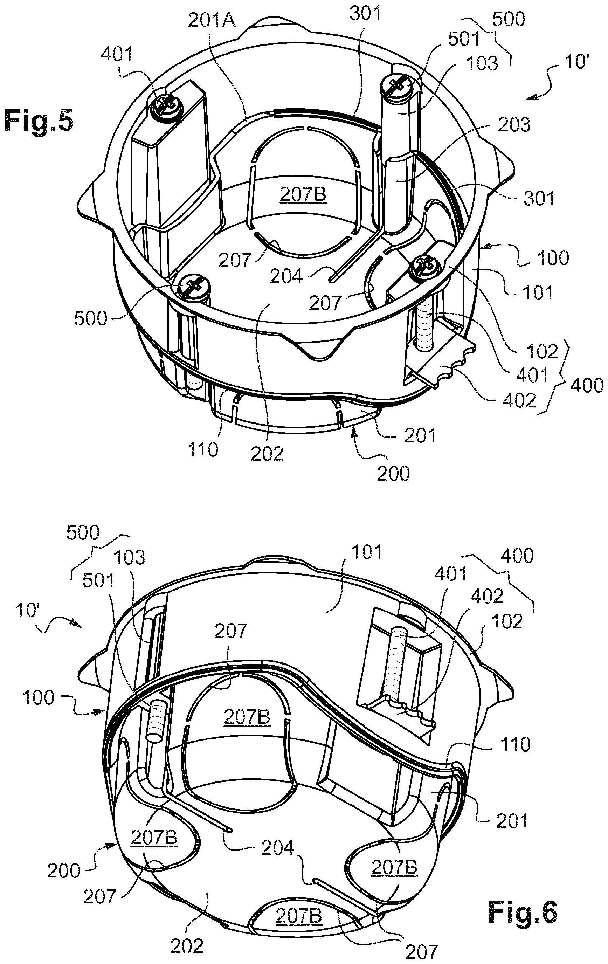

Sur les figures 1 à 4 d'une part, et sur les figures 5 à 10 d'autre part, on a respectivement représenté deux modes de réalisation d'une boîte électrique 10 ; 10' à encastrer dans une cloison.

En préliminaire, on notera que les éléments identiques ou similaires dans ces deux modes de réalisation de l'invention seront, dans la mesure du possible, référencés par les mêmes signes de référence et ne seront pas décrits à chaque fois.

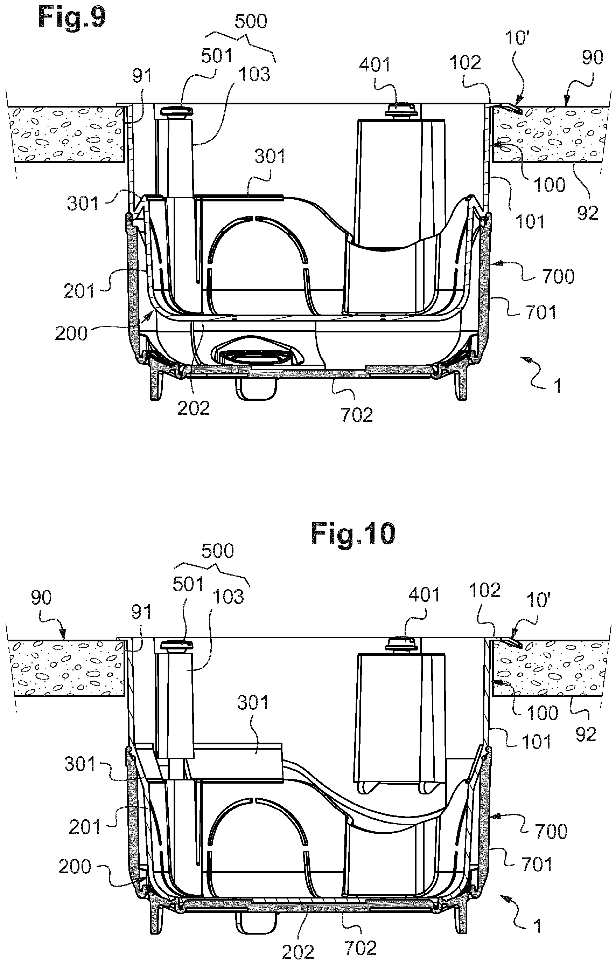

Dans ces deux modes de réalisation, la boîte électrique 10 ; 10' est plus spécifiquement conçue pour être rapportée dans une cavité 91 pratiquée dans une cloison creuse 90 (voir figures 9 et 10).

Cette cloison creuse pourrait être une paroi maçonnée (par exemple en briques creuses), mais il s'agira plutôt ici d'une cloison plaquée (avec une ossature en bois ou en métal sur laquelle sont rapportées des plaques en plâtre 92 ou en bois). Ici, la cavité 91 est alors formée par une simple ouverture pratiquée à la scie cloche dans l'une des plaques en plâtre 92.

Dans la description, les termes « avant » et « arrière » seront alors utilisés par rapport à la direction du regard de l'installateur vers la cloison creuse 90 sur laquelle est rapportée la boîte. Ainsi, l'avant d'un élément désignera le côté de cet élément qui est tourné vers l'extérieur de la cloison (côté installateur) et l'arrière désignera le côté opposé (côté fond de la cloison creuse 90).

Dans la suite de cette description, on décrira tout d'abord le premier mode de réalisation de l'invention représenté sur les figures 1 à 4, et ensuite le second mode de réalisation de l'invention représenté sur les figures 5 à 10.

Comme le montrent les figures 1 à 4, la boîte électrique 10 comporte deux parties principales, à savoir un corps arrière 200 et un corps avant 100. Ces deux parties sont distinctes ce qui permet, comme cela apparaîtra plus clairement à la lecture de la suite de cet exposé, d'ajuster la profondeur de la boîte électrique 10.

Le corps arrière 200 comporte une paroi latérale 201 qui est tubulaire et sensiblement de révolution autour d'un axe principal A1, qui est fermée à l'arrière par une paroi de fond 202, et qui est ouverte vers l'avant.

Le corps avant 100 comporte pour sa part une paroi latérale 101 qui est tubulaire et sensiblement de révolution autour de l'axe principal A1, et qui est ouverte vers l'avant et vers l'arrière. Cette paroi latérale 101 présente un diamètre intérieur qui est supérieur au diamètre extérieur de la paroi latérale 201 du corps arrière 200, si bien qu'elle peut coulisser sur celle-ci afin d'ajuster la profondeur de la boîte électrique 10.

La boîte électrique 10 est prévue pour s'accrocher à la cloison creuse 90, pour accueillir un appareillage électrique (prise de courant, interrupteur, détecteur...), et pour recevoir par l'arrière des conducteurs électriques en vue d'alimenter en courant l'appareillage électrique.

Le corps avant 100 comprend à cet effet des moyens de fixation 400 à la cloison 90 et des moyens d'assujettissement 500 de l'appareillage électrique, tandis que le corps arrière 200 délimite des entrées 207 pour des gaines de cheminement de conducteurs électriques tirées dans la cloison creuse 90.

Les moyens de fixation 400 et les entrées 207 seront décrits plus loin dans cet exposé. On peut en revanche décrire dès maintenant les moyens d'assujettissement 500 de l'appareillage électrique.

Ces moyens d'assujettissement 500 comportent tout d'abord deux puits de vissage 103 qui s'étendent le long de la paroi latérale 101 du corps avant 100, parallèlement à l'axe principal A1, de façon diamétralement opposée par rapport à cet axe. Ces puits de vissage 103 se présentent simplement sous la forme de fûts cylindriques.

Les moyens d'assujettissement 500 comportent en outre deux vis de fixation 501 qui sont vissées dans ces puits de vissage 103 et qui permettent de bloquer l'appareillage électrique contre le bord avant de la paroi latérale 101 du corps avant 100 de la boîte électrique 10.

L'invention porte plus particulièrement sur la jonction prévue entre le corps avant 100 et le corps arrière 200 de la boîte électrique 10 en vue de permettre l'ajustement de la profondeur de cette boîte.

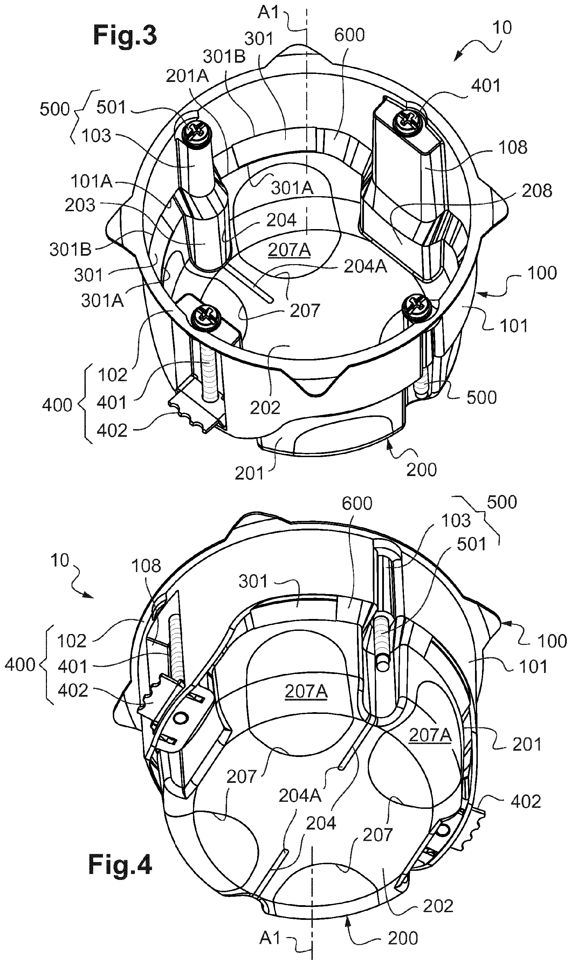

Comme le montre bien la figure 3, cette jonction est ici assurée par plusieurs éléments de jonction 301 distincts qui relient chacun le bord arrière 101A de la paroi latérale 101 du corps avant 100 au bord avant 201A de la paroi latérale 201 du corps arrière 200.

Il est ici prévu quatre éléments de jonction 301 distincts régulièrement répartis autour de l'axe principal A1 et situés à distance les uns des autres.

Comme le montrent plus particulièrement les figures 3 et 4, chaque élément de jonction 301 se présente sous la forme d'une plaquette sensiblement plane et rectangulaire connectée par un de ses côtés au bord arrière 101A de la paroi latérale 101 du corps avant 100 via une première charnière 301B, et par un côté opposé au bord avant 201A de la paroi latérale 201 du corps arrière 200 via une seconde charnière 301A.

Chaque plaquette présente plus précisément ici une forme incurvée (de révolution autour de l'axe principal A1), mais elle pourrait être parfaitement plane.

Ici, la paroi de fond 202 du corps arrière 200, les parois latérales 101, 201 des corps avant et arrière 100, 200 et les éléments de jonction 301 sont tous issus d'une seule opération de moulage d'une même matière plastique, si bien qu'ils forment une seule pièce monobloc. La matière plastique employée peut être par exemple du polypropylène.

Alors, les charnières 301A, 301B sont formées par des réductions d'épaisseur de matière. En d'autres termes, les côtés de l'élément de jonction 301 qui sont connectés aux parois latérales 101, 201 des corps avant et arrière 100, 200 sont amincis, ce qui leur permet de se déformer afin de permettre à l'élément de jonction 301 de pivoter par rapport à ces parois latérales.

A ce stade, on comprend qu'il est nécessaire que la boîte électrique 10 se déforme pour permettre aux éléments de jonction 301 de simultanément pivoter.

Ici, c'est en déformant le corps arrière 200 que ce dernier va pouvoir se déplacer par rapport au corps avant 100 entre deux positions stables.

La première position stable est illustrée sur les figures 1 et 2. Dans cette position, la paroi latérale 201 du corps arrière 200 est en partie emmanchée dans la paroi latérale 101 du corps avant 100. Ainsi, chaque élément de jonction 301 se trouve pris en sandwich entre la paroi latérale 101 du corps avant 100 et la paroi latérale 201 du corps arrière 200, si bien que la boîte électrique 10 présente une profondeur réduite, ici de 40 millimètres environ.

La seconde position stable est illustrée sur les figures 3 et 4. Dans cette position, la paroi latérale 201 du corps arrière 200 est écartée axialement de la paroi latérale 101 du corps avant 100. Ainsi, chaque élément de jonction 301 se trouve positionné dans le prolongement, d'un côté, de la paroi latérale 101 du corps avant 100, et, de l'autre, de la paroi latérale 201 du corps arrière 200, si bien que la boîte électrique 10 présente une profondeur importante, ici de 50 millimètres environ.

La boîte électrique 10 est préférentiellement livrée dans sa première position, si bien que lorsque l'installateur observe que la cloison creuse 90 est suffisamment épaisse, il peut repousser le fond 202 du corps arrière 200 vers l'arrière, de façon à placer la boîte électrique 10 dans sa seconde position stable.

Pour que l'effort requis pour repousser ainsi le fond 202 du corps arrière 200 vers le fond de la cloison creuse 90 ne soit pas trop important, le corps arrière 200 comporte, entre deux éléments de jonction 301 distincts, au moins une partie déformable 203 qui est adaptée à se déformer avec une plus grande amplitude que le reste du corps arrière 200 lors du pivotement des éléments de jonction 301.

Il est ici prévu deux parties déformables 203 distinctes, situées de façon diamétralement opposée par rapport à l'axe principal A1.

Chaque partie déformable est ici formée par un renfoncement 203 vers l'intérieur de la paroi latérale 201 du corps arrière 200.

Plus précisément, si la paroi latérale 201 du corps arrière 200 présente une forme tubulaire sensiblement de révolution autour de l'axe principal A1, elle présente toutefois deux renfoncements 203 diamétralement opposés, de forme semi-cylindriques autour d'axes parallèles à l'axe principal A1. Ces deux renfoncements 203 sont prévus pour contourner les puits de vissage 103 du corps avant 100, de façon à ce que le corps arrière 200 puisse être emmanché sur le corps avant 100 sans que sa paroi latérale 201 ne vienne percuter les puits de vissage 103 du corps avant 100.

Chaque renfoncement 203 s'étend ainsi depuis le fond 202 jusqu'au bord avant 201A de la paroi latérale 201 du corps arrière 200.

Pour optimiser son caractère déformable, chaque renfoncement 203 présente préférentiellement une fente 204 qui s'étend à partir du bord avant 201A de la paroi latérale 201 du corps arrière 200. Préférentiellement encore, cette fente 204 s'étend sur toute la hauteur du renfoncement 203, ici de façon rectiligne. Comme cela apparaît sur les figures 1 à 4, elle peut même se prolonger dans le fond 202 du corps arrière 200.

La largeur de chaque fente 204 est choisie de façon à ce que :
- lorsque la boîte électrique 10 est dans l'une ou l'autre de ses deux positions stables, les bords de cette fente 204 sont écartés l'un de l'autre, et
- lorsque la boîte électrique 10 passe de l'une à l'autre de ses deux positions stables, les bords de cette fente 204 se rapprochent tout en restant préférentiellement à distance l'un de l'autre, de façon à faciliter ce passage entre les deux positions stables.

Dans le mode de réalisation représenté sur les figures 1 à 4, il est prévu deux fentes 204 identiques. En variante, il pourrait être envisagé de prévoir un plus grand nombre de fentes, pouvant présenter des longueurs éventuellement différentes les unes des autres.

Ici, la boîte électrique 10 est prévue pour présenter un indice de protection à l'eau et/ou à l'air, conforme à la norme IP (EN 60529).

Pour cela, la fente 204 est obturée par une membrane 204A réalisée dans une matière plus souple que le polypropylène. Ici, cette membrane 204A est réalisée en SEBS (polystyrène-b-poly(éthylène-butylène)-b-polystyrène).

Dans le même objectif, il est prévu, entre chaque paire d'éléments de jonction 301 voisins, une pellicule d'étanchéité 600 qui relie le corps avant 100 et le corps arrière 200. Cette pellicule d'étanchéité 600 est réalisée dans la même matière que la membrane 204A.

On peut maintenant décrire plus en détail les moyens de fixation 400 de la boîte électrique à la cloison 90.

Comme le montre la figure 1, ces moyens de fixation 400 comportent ici tout d'abord un épaulement 102 qui est adapté à prendre appui contre la face avant de la plaque de plâtre 92, autour de l'ouverture circulaire 91 pratiquée dans celle-ci. Cet épaulement 102 se présente ici sous la forme d'un rebord périphérique qui longe extérieurement le bord avant de la paroi latérale 101 du corps avant 100 et qui est formé d'une seule pièce avec celle-ci.

Les moyens de fixation 400 comportent en outre deux griffes 402 qui interviennent en position diamétralement opposée sur la face externe de la paroi latérale 101 du corps avant 100, et qui, sous le contrôle de vis 401 engagées dans des cheminées qui débouchent à l'avant du corps avant 100, peuvent s'accrocher à la face arrière du panneau de plâtre 92.

On observe ici que la paroi latérale 101 du corps avant 100 comporte à cet effet deux renfoncements 108 vers l'intérieur, le long desquels les griffes 402 peuvent remonter sous le contrôle de vis 401. Pour permettre d'emmancher le corps arrière 200 dans le corps avant 100 (en première position stable), la paroi latérale 201 du corps arrière 200 comporte également deux renfoncements 208 vers l'intérieur qui contournent les renfoncements 108 formés par la paroi latérale 101 du corps avant 100.

En variante, les moyens de fixation du corps avant de la boîte électrique à la cloison creuse pourraient se présenter sous une forme différente. A titre d'exemple, il pourrait s'agir de volets découpés dans la paroi latérale du corps avant et qui, lors de l'engagement de l'appareillage électrique dans la boîte, seraient forcés par cet appareillage à se déployer pour s'accrocher à la face arrière du panneau de plâtre.

On peut maintenant aussi décrire plus en détail les entrées 207 prévues dans le corps arrière 200 pour tirer des conducteurs électriques à l'intérieur de la boîte électrique 10.

Il est ici prévu quatre entrées 207 réparties autour de l'axe principal A1 et qui s'étendent chacune à cheval sur la paroi latérale 201 et sur la paroi de fond 202 du corps arrière 200.

Pour présenter l'indice de protection souhaité, ces entrées 207 sont initialement fermées par des opercules souples 207A déchirables. Ces opercules souples 207A sont réalisés dans la même matière que la membrane 204A fermant chaque fente 204.

En pratique, les opercules souples 207A, membranes 204A et pellicules d'étanchéité 600 sont toutes formées de façon concomitante, lors d'une opération de surmoulage de SEBS sur le polypropylène constituant le reste de la boîte électrique 10.

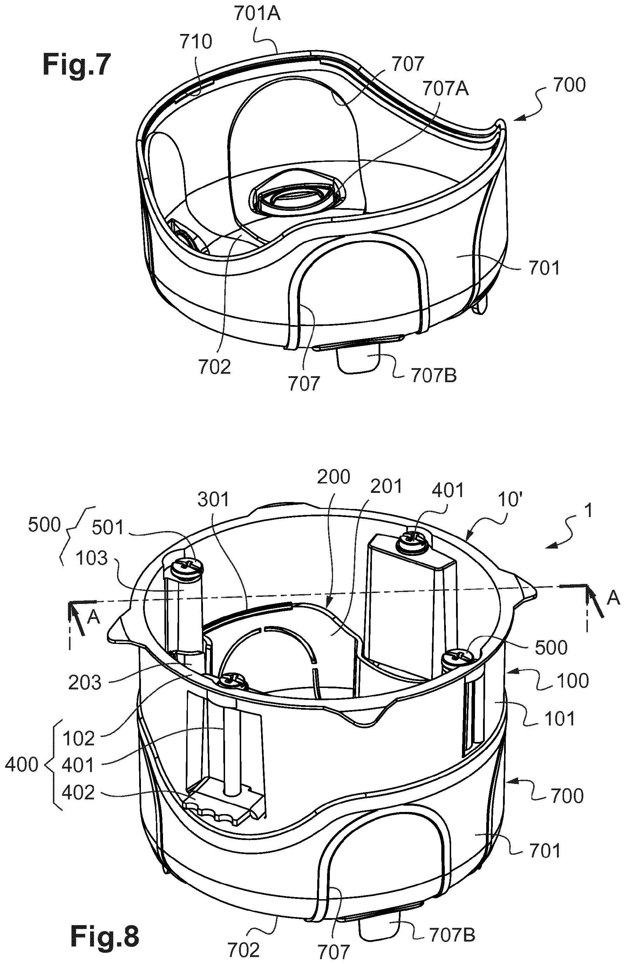

Dans le deuxième mode de réalisation représenté sur les figures 5 à 10, l'indice de protection est conféré non plus par une telle couche de SEBS surmoulée sur le reste de la boîte électrique 10, mais plutôt par l'emploi d'un étui d'étanchéité 700 tel que celui illustré sur la figure 7.

Dans ce mode de réalisation, la boîte électrique 10' est identique à la boîte électrique 10 représentée sur les figures 1 à 4, aux deux différences près mentionnées ci-après.

La première différence, énoncée ci-dessus, est que la boîte électrique 10' est dépourvue de couche souple en SEBS. Dès lors, les fentes 204, les entrées 207 et les espaces situés entre les éléments de jonction 301 restent ouverts.

On peut toutefois prévoir, comme le montrent les figures 5 et 6, que les entrées 207 soient initialement obturées par des opercules défonçables 207B connectés au reste du corps arrière 200 par des parties sécables. Ces opercules défonçables 207B ont ici vocation à être retirées pour laisser le passage à une gaine de cheminement logeant des conducteurs électriques.

Comme le montrent les figures 5 et 6, la seconde différence entre la boîte électrique 10' et celle représentée sur les figures 1 à 4 est que la paroi latérale 101 de son corps avant 100 présentant un relief d'accrochage 110 qui courre sur l'ensemble de son pourtour et qui permet l'accrochage de l'étui d'étanchéité 700.

Ce relief d'accrochage 110 se présente ici sous la forme d'une rainure qui longe l'ensemble du bord arrière 101A de la paroi latérale 101 du corps avant 100 et qui est située en creux dans cette paroi latérale 101.

Comme le montre la figure 8, l'étui d'étanchéité 700 est alors conçu pour s'accrocher à ce relief d'accrochage 110 afin de former avec la boîte électrique 10' un ensemble 1 présentant l'indice de protection souhaité.

Comme le montre la figure 7, cet étui d'étanchéité 700 présente pour cela un fond 702 bordé à l'avant par une paroi latérale 701 dont le bord avant 701A suit la courbure du relief d'accrochage 110 du corps avant 100 de la boîte électrique 10'.

Cette paroi latérale 701 présente ici une nervure 710 qui longe l'ensemble de son bord avant 701A et qui est adaptée à s'engager dans le relief d'accrochage 110 pour assurer l'accrochage de l'étui d'étanchéité 700 au corps avant 100 de la boîte électrique 10'.

Cet étui d'étanchéité 700 comporte quatre entrées 707 de conducteurs électriques, qui s'étendent chacune à cheval sur sa paroi latérale 701 et sur son fond 702 et qui sont initialement fermées par des opercules arrachables 707A.

Ces opercules arrachables 707A présentent ici des formes particulières destinées à faciliter l'arrachement d'une (ou de plusieurs) zone de ces opercules dont le contour est sensiblement circulaire et dont le diamètre correspond à un diamètre normalisé de gaines de cheminement de conducteurs électriques. Ils comportent en particulier une languette externe centrale 707B facilement préhensible et, autour de cette languette externe centrale 707B, une ou des lignes circulaires de faibles épaisseurs et donc de moindres résistances.

Ici, l'ensemble de l'étui d'étanchéité 700 est formé d'une seule pièce par moulage d'une matière souple telle que le SEBS.

Sur les figures 9 et 10, on a représenté en coupe l'ensemble 1, lorsque la boîte électrique 10' est dans l'une ou l'autre de ses deux positions stables.

On y observe que l'étui d'étanchéité 700 présente une profondeur telle que la paroi de fond 202 du corps arrière 200 de la boîte électrique 10' vient en appui contre le fond 702 de l'étui d'étanchéité 700, sans déformer ce dernier, lorsqu'il est dans sa seconde position stable (voir figure 10).

Lorsqu'il est dans sa première position stable, la paroi de fond 202 du corps arrière 200 de la boîte électrique 10' est située à distance du fond 702 de l'étui d'étanchéité 700 (voir figure 9). Alors, lorsque l'ensemble est rapporté dans une cloison creuse 90 de faible épaisseur, la souplesse de l'étui d'étanchéité 700 lui permet de s'écraser afin de ne pas former obstacle à l'engagement de la boîte électrique 10' dans la cloison.

La présente invention n'est nullement limitée aux modes de réalisation décrits et représentés, mais l'homme du métier saura y apporter toute variante conforme à l'invention.

En particulier, les charnières prévues entre les éléments de jonction et les corps avant et arrière pourraient être formées autrement. Elles pourraient ainsi par exemple comporter chacune une tige métallique sur laquelle seraient articulés des crochets venant de formation avec les corps avant et arrière. Encore à titre d'exemple, chaque charnière pourrait être formée par, d'une part, un axe venant de moulage avec l'une des parties, et, d'autre part, un crochet crocheté sur cet axe et venant de formation avec l'autre des parties.

Par ailleurs, si de façon préférentielle chaque partie déformable du corps arrière présente une fente en vue de faciliter le passage de la boîte électrique d'une position stable à l'autre, on pourrait prévoir que cette partie déformable en soit dépourvue.

On pourrait ainsi prévoir que la partie déformable présente une épaisseur au moins deux fois inférieure à celle du reste de la paroi latérale du corps arrière, de façon à lui permettre de se déformer sans trop d'efforts.

Selon une autre variante de l'invention, la boîte électrique pourrait présenter une forme non pas cylindrique, comme cela est représenté sur les différentes figures, mais au contraire une forme oblongue de façon à lui permettre de recevoir non pas un, mais plusieurs appareillages électriques.

## Revendications

1. Boîte électrique (10 ; 10') à engager dans une cloison (90), comportant :
- un corps arrière (200) qui comprend un fond (202),
- un corps avant (100) qui comprend des moyens de fixation (400) à la cloison (90), et
- au moins un élément de jonction (301) relié au corps avant (100) et au corps arrière (200) par deux charnières (301A, 301B) de telle façon que le corps arrière (200) peut prendre deux positions stables par rapport au corps avant (100), dont une première position stable dans laquelle la boîte électrique (10 ; 10') présente une profondeur inférieure à celle qu'elle présente dans une seconde position stable,
**caractérisée en ce qu'**il est prévu plusieurs éléments de jonction (301) distincts et **en ce que** le corps arrière (200) comporte, entre deux éléments de jonction (301) distincts, au moins une partie déformable (203) qui est adaptée à se déformer avec une plus grande amplitude que le reste du corps arrière (200) lors du pivotement des éléments de jonction (301) par rapport au corps avant (100) et au corps arrière (200).

2. Boîte électrique (10 ; 10') selon la revendication précédente, dans laquelle la partie déformable (203) présente une fente (204).

3. Boîte électrique (10 ; 10') selon la revendication précédente, dans laquelle le corps arrière (200) comporte une paroi latérale (201) qui est fermée à l'arrière par le fond (202) et qui s'ouvre à l'avant au niveau d'un bord avant (201A), et dans lequel la fente (204) débouche sur ledit bord avant (201A).

4. Boîte électrique (10 ; 10') selon la revendication précédente, dans laquelle la fente (204) se prolonge dans le fond (202) du corps arrière (200).

5. Boîte électrique (10 ; 10') selon l'une des revendications précédentes, dans laquelle le corps arrière (200) comporte une paroi latérale (201) qui est fermée à l'arrière par le fond (202) et qui forme au moins un renfoncement (203) vers l'intérieur, ladite partie déformable (203) étant formée par ce renfoncement (203).

6. Boîte électrique (10 ; 10') selon la revendication précédente, dans laquelle le corps avant (100) comporte un puits de vissage (103) pour y visser une vis de fixation (500), et le renflement (203) délimite un passage pour le puits de vissage (103).

7. Boîte électrique (10 ; 10') selon l'une des revendications précédentes, dans laquelle une partie au moins du corps avant (100), une partie au moins du corps arrière (200), et chaque élément de jonction (301) viennent de formation d'une seule pièce par moulage d'une matière plastique, et dans laquelle chaque charnière (301A, 301B) est formée par un bord aminci de l'élément de jonction (301).

8. Boîte électrique (10 ; 10') selon l'une des revendications précédentes considérée dans sa dépendance avec l'une des revendications 2 à 4, dans laquelle la fente (204) est obturée par un opercule réalisé dans un matériau plus souple que la partie déformable (203).

9. Boîte électrique (10) selon l'une des revendications 1 à 8, dans laquelle il est prévu au moins un film d'étanchéité qui relie le corps avant (100) et le corps arrière (200) entre chaque élément de jonction (301).

10. Boîte électrique (10') selon l'une des revendications 1 à 7, dans laquelle le corps avant (100) comporte une paroi latérale (101) présentant un relief d'accrochage (110) qui courre sur l'ensemble de son pourtour et qui permet l'accrochage d'un étui d'étanchéité (700).

11. Boîte électrique (10') selon la revendication précédente, dans laquelle la paroi latérale (101) du corps avant (100) présente un bord arrière (101A) auquel se rattache chaque élément de jonction (301), et le relief d'accrochage (110) comporte une nervure et/ou une rainure qui longe l'ensemble dudit bord arrière (101A).

12. Ensemble (1) comportant une boîte électrique (10') selon l'une des deux revendications précédentes et un étui d'étanchéité (700) accroché au relief d'accrochage (110) du corps avant (100) de ladite boîte électrique (10').

## Patentansprüche

1. In eine Wand (90) einzusetzende elektrische Dose (10; 10') mit
- einem hinteren Körper (200), der einen Boden (202) aufweist,
- einem vorderen Körper (100), der Mittel (400) zum Befestigen an der Wand (90) aufweist, und
- wenigstens einem mit dem vorderen Körper (100) und dem hinteren Körper (200) durch zwei Scharniere (301A, 301B) derart verbundenen Verbindungselement (301), daß der hintere Körper (200) zwei gegenüber dem vorderen Körper (100) stabile Stellungen einnehmen kann, von denen eine erste stabile Stellung eine ist, in der die elektrische Dose (10; 10') eine geringere Tiefe aufweist als jene, die sie in der zweiten stabilen Stellung aufweist,
**dadurch gekennzeichnet, daß** mehrere getrennte Verbindungselemente (301) vorgesehen sind, und daß der hintere Körper (200) zwischen zwei getrennten Verbindungselementen (301) wenigstens einen verformbaren Teil (203) aufweist, der dazu ausgelegt ist, sich beim Schwenken der Verbindungselemente (301) gegenüber dem vorderen Körper (100) und dem hinteren Körper (200) in größerem Umfang zu verformen als der Rest des hinteren Körpers (200).

2. Elektrische Dose (10; 10') gemäß dem vorangehenden Anspruch, **dadurch gekennzeichnet, daß** der verformbare Teil (203) einen Schlitz (204) aufweist.

3. Elektrische Dose (10; 10') gemäß dem vorangehenden Anspruch, **dadurch gekennzeichnet, daß** der hintere Körper (200) eine Seitenwand (201) aufweist, die hinten durch den Boden (202) verschlossen ist und die sich vorne im Bereich eines vorderen Rands (201A) öffnet, und daß der Schlitz (204) am vorderen Rand (201A) mündet.

4. Elektrische Dose (10; 10') gemäß dem vorangehenden Anspruch, **dadurch gekennzeichnet, daß** sich der Schlitz (204) im Boden (202) des hinteren Körpers (200) fortsetzt.

5. Elektrische Dose (10; 10') gemäß einem der vorangehenden Ansprüche, **dadurch gekennzeichnet, daß** der hintere Körper (200) eine Seitenwand (201) aufweist, die hinten durch den Boden (202) verschlossen ist und die wenigstens eine Vertiefung (203) nach innen bildet, wobei der verformbare Teil (203) durch die Vertiefung (203) gebildet wird.

6. Elektrische Dose (10; 10') gemäß dem vorangehenden Anspruch, **dadurch gekennzeichnet, daß** der vordere Körper (100) einen Schraubschacht (103) aufweist, um dort eine Befestigungsschraube (500) hineinzuschrauben, und die Vertiefung (203) einen Durchgang für den Schraubschacht (103) begrenzt.

7. Elektrische Dose (10; 10') gemäß einem der vorangehenden Ansprüche, **dadurch gekennzeichnet, daß** wenigstens ein Teil des vorderen Körpers (100), wenigstens ein Teil des hinteren Körpers (200) und jedes Verbindungselement (301) durch Formen eines Plastikmaterials in einem Stück hergestellt sind und daß jedes Scharnier (301A, 301B) durch einen dünner gestalteten Rand des Verbindungselements (301) gebildet ist.

8. Elektrische Dose (10; 10') gemäß einem der vorangehenden Ansprüche in Abhängigkeit von einem der Ansprüche 2 bis 4, **dadurch gekennzeichnet, daß** der Schlitz (204) durch einen aus einem flexibleren Material als der verformbare Teil (203) gefertigten Deckel verdeckt ist.

9. Elektrische Dose (10) gemäß einem der Ansprüche 1 bis 8, **dadurch gekennzeichnet, daß** wenigstens ein Abdichtungsfilm vorgesehen ist, der den vorderen Körper (100) zwischen jedem Verbindungselement (301) mit dem hinteren Körper (200) verbindet.

10. Elektrische Dose (10') gemäß einem der Ansprüche 1 bis 7, **dadurch gekennzeichnet, daß** der vordere Körper (100) eine Seitenwand (101) mit einem Einhakrelief (110) aufweist, das über deren gesamten Umfang läuft und das ein Einhaken einer Abdichtungshülle (700) ermöglicht.

11. Elektrische Dose (10') gemäß dem vorangehenden Anspruch, **dadurch gekennzeichnet, daß** die Seitenwand (101) des vorderen Körpers (100) einen hinteren Rand (101A) aufweist, an den jedes Verbindungselement (301) angreift, und daß das Einhakrelief (110) eine Rippe und/oder eine Nut aufweist, die an der Gesamtheit des hinteren Rands (101A) entlangläuft.

12. Vorrichtung (1), die eine elektrische Dose (10') gemäß einem der beiden vorangehenden Ansprüche und eine am Einhakrelief (110) des vorderen Körpers (100) der elektrischen Dose (10') eingehakte Abdichtungshülle (700) aufweist.

## Claims

1. An electrical box (10; 10') for engaging in a partition (90), the box comprising:
• a rear body (200) having a back wall (202);
• a front body (100) having fastener means (400) for fastening to the partition (90); and
• at least one junction element (301) connected to the front body (100) and to the rear body (200) by two hinges (301A, 301B) in such a manner that the rear body (200) can occupy two stable positions relative to the front body (100), comprising a first stable position in which the electrical box (10; 10') presents a depth that is less than the depth that it presents when in a second stable position;
the electrical box being **characterized in that** a plurality of distinct junction elements (301) are provided and **in that** the rear body (200) includes at least one deformable portion (203) between two distinct junction elements (301), which deformable portion is adapted to deform with greater amplitude than the remainder of the rear body (200) during pivoting of the junction elements (301) relative to the front body (100) and to the rear body (200).

2. An electrical box (10; 10') according to the preceding claim, wherein the deformable portion (203) presents a slot (204).

3. An electrical box (10; 10') according to the preceding claim, wherein the rear body (200) includes a side wall (201) that is closed at the rear by the back wall (202) and that opens to the front at a front edge (201A), and wherein the slot (204) opens out into said front edge (201A).

4. An electrical box (10; 10') according to the preceding claim, wherein the slot (204) extends into the back wall (202) of the rear body (200).

5. An electrical box (10; 10') according to any preceding claim, wherein the rear body (200) includes a side wall (201) that is closed at the rear by the back wall (202) and that forms at least one setback (203) towards the inside, said deformable portion (203) being formed by the setback (203).

6. An electrical box (10; 10') according to the preceding claim, wherein the front body (100) includes a screw well (103) for receiving a fastener screw (500), and the setback (203) defines a passage for the screw well (103).

7. An electrical box (10; 10') according to any preceding claim, wherein at least a portion of the front body (100), at least a portion of the rear body (200), and each junction element (301) are formed as a single part by molding a plastics material, and wherein each hinge portion (301A, 301B) is formed by a thinned edge of the junction element (301).

8. An electrical box (10; 10') according to any preceding claim considered as being dependent on any one according to any one of claims 2 to 4, wherein the slot (204) is closed by a membrane made of a material that is more flexible than the deformable portion (203).

9. An electrical box (10) according to any one of claims 1 to 8, wherein at least one sealing film is provided that connects together the front body (100) and the rear body (200) between each junction element (301).

10. An electrical box (10') according to any one of claims 1 to 7, wherein the front body (100) includes a side wall (101) presenting an attachment portion in relief (110) that runs over its entire periphery and that enables a sealing case (700) to be attached thereto.

11. An electrical box (10') according to the preceding claim, wherein the side wall (101) of the front body (100) presents a rear edge (101A) to which each junction element (301) is attached, and the attachment portion in relief (110) includes a rib and/or a groove running along all of said rear edge (101A).

12. An assembly (1) comprising both an electrical box (10') according to either one of the two preceding claims and also a sealing case (700) attached to the attachment portion in relief (110) of the front body (100) of said electrical box (10').
